## Europäisches Patentamt

## European Patent Office

## Office européen des brevets

(19)

(11)    **EP 0 715 497 B1**

(12)    **FASCICULE DE BREVET EUROPEEN**

(45) Date de publication et mention
de la délivrance du brevet:
**04.10.2000  Bulletin 2000/40**

(51) Int Cl.⁷: **A23L 1/23**, A23L 1/231,
A23L 1/226, A23D 7/015,
A23D 9/013

(21) Numéro de dépôt: **95919614.8**

(22) Date de dépôt: **13.06.1995**

(86) Numéro de dépôt international:
**PCT/IB95/00478**

(87) Numéro de publication internationale:
**WO 95/34222 (21.12.1995 Gazette 1995/54)**

(54) **PROCEDE D'AROMATISATION ET COMPOSITION AROMATISANTE**

WÜRZUNGSVERFAHREN UND GEWÜRZZUSAMMENSETZUNG

FLAVOURING COMPOSITION AND PROCESS

(84) Etats contractants désignés:
**AT CH DE ES FR GB IT LI NL**

(30) Priorité:  **16.06.1994  CH 189994**

(43) Date de publication de la demande:
**12.06.1996  Bulletin 1996/24**

(73) Titulaire: **FIRMENICH SA**
**1211 Genève 8 (CH)**

(72) Inventeurs:
• **VAN DEN OUWELAND, Godefridus**
**CH-1232 Confignon (CH)**
• **ESCHER, Sina, Dorothea**
**CH-1232 Confignon (CH)**
• **BENZI, François**
**CH-1203 Genève (CH)**
• **VENRIETVELDE, Claude**
**F-74160 Saint-Julien-en-Genevois (FR)**

(74) Mandataire:
**Salvaterra-Garcia, Maria de Lurdes et al**
**Firmenich SA**
**Département des Brevets**
**Case Postale 239**
**1211 Genève 8 (CH)**

(56) Documents cités:
| EP-A- 0 059 997 | EP-A- 0 074 140 |
| WO-A-92/00678 | US-A- 4 284 655 |
| US-A- 4 414 229 | US-A- 5 092 964 |

EP 0 715 497 B1

## Description

L'aromatisation de produits alimentaires à faible teneur en graisses, c'est-à-dire de produits dits allégés ("light") ou à basses calories, pose des problèmes particuliers. Bien que l'on puisse compenser de façon plus ou moins adéquate les notes gustatives caractéristiques des matières grasses, en ajoutant des ingrédients aromatisants appropriés, il reste le problème de la difficulté à reproduire, dans le produit allégé, la sensation en bouche ou "mouthfeel" et la consistance de type crémeux qui sont justement imparties par lesdites matières grasses. Ce problème est particulièrement aigu dans les produits laitiers et dans les margarines allégées, ainsi que dans les mayonnaises et les glaces.

La présente invention apporte précisément une solution originale au problème. Nous avons découvert qu'il était possible d'améliorer la sensation en bouche ou "mouthfeel" d'un produit alimentaire, notamment d'un produit allégé en graisses, en ajoutant à ce produit une composition aromatisante particulière.

## Exposé de l'invention

Ainsi un objet de l'invention est de fournir un procédé pour la préparation d'une composition aromatisante caractérisé en ce qu'on ajoute à un ingrédient aromatisant, solvant ou adjuvant d'usage courant la fraction diglycéridique d'un hydrolysat d'une graisse animale ou végétale.

Selon l'invention la graisse ou huile animale ou végétale peut être du beurre, de la crème ou du gras de lait, de l'huile de poisson, de la graisse de boeuf, de la graisse de poulet, de la graisse de porc, de la graisse de mouton ou d'agneau, de l'huile d'olive ou de l'huile d'arachide, par exemple.

Dans ce qui suit, on utilisera indifféremment les termes de huile et graisse pour désigner la matière grasse d'origine animale ou végétale qui, une fois hydrolysée, fournit la fraction diglycéridique qui sert à préparer les compositions aromatisantes de l'invention.

Selon un mode d'exécution plus préférentiel du procédé de l'invention l'hydrolysat de la graisse animale ou végétale est un hydrolysat de beurre ou de lait.

Il est connu d'utiliser des hydrolysats de beurre, obtenus par hydrolyse enzymatique d'huile ou de gras de beurre, pour impartir des notes crémeuses et riches à des produits laitiers en particulier. On peut citer les brevets US-A-4414229, US-A-5092964 ou encore US-A-4284655 qui font état de l'utilisation d'hydrolysats de crème ou gras de beurre pour l'aromatisation de margarine et autres pâtes à tartiner, dans le but d'améliorer les propriétés 0 organoleptiques de ces produits, et en particulier de rendre un effet "mouthfeel" comparable à celui du beurre. On connaît également de l'art antérieur la demande internationale WO-A-9200678 qui fait état de l'utilisation de matières grasses partiellement hydrolysée puis éventuellement bioconverties de méthylcétones dans l'aromatisation de 5 produits similaires. Cependant, aucun de ces documents ne mentionne la possibilité d'utiliser une partie spécifique de l'hydrolysat de graisse.

Or, nous avons maintenant découvert avec surprise que l'on pouvait améliorer le "mouthfeel" de compositions aromatisantes destinées à des produits allégés, en ajoutant à ces compositions certains ingrédients de l'hydrolysat de beurre ou d'autres graisses animales ou végétales, soigneusement sélectionnés pour leur effet "mouthfeel" accentué, constaté lors d'évaluations organoleptiques effectuées par des experts aromaticiens.

L'hydrolysat de beurre est conventionnellement obtenu par l'action d'une enzyme telle qu'une lipase sur une huile ou gras de beurre. Ce dernier est typiquement le résidu que l'on obtient à partir de beurre fondu et centrifugé, après l'élimination de l'eau. Alternativement, on peut aussi effectuer l'hydrolyse du beurre fondu et séparer ensuite la phase aqueuse des phases neutre et acide, constituant l'hydrolysat.

Ce dernier contient donc une phase acide, comprenant les acides gras libérés par l'hydrolyse de l'huile de beurre, et une phase neutre contenant des glycérides. Parmi ces derniers, on trouve des triglycérides, des diglycérides et des monoglycérides des acides gras du beurre. Comme il est décrit plus loin, on peut séparer ces trois fractions de glycérides et évaluer individuellement leur propriétés organoleptiques. Le résultat de ces évaluations a montré que c'est la fraction diglycéridique qui possède au mieux les propriétés organoleptiques généralement liées aux matières grasses et qu'elle peut être avantageusement utilisée pour améliorer la sensation en bouche des produits dans lesquels on l'incorpore.

Selon un mode d'exécution préférentiel du procédé de l'invention on ajoute en plus un ou plusieurs composés choisis dans le groupe constitué par l'acide butyrique, l'acide décanoïque, l'acide hexanoïque, l'acide octanoïque, l'acide déc-9-énoïque, l'acide 4-méthylnonanoïque, l'acide 4-méthyloctanoïque, l'acide 2-méthylheptanoïque, l'acide oléique, l'acide hexadécanoïque, l'acide pentadécanoïque, l'acide 2-méthylhexanoïque, l'acide 2-méthylbutanoïque, l'heptadécanol, l'hexadécanol et la 2-tétradécanone. Nous avons observé que l'adjonction des composés susmentionnés renforçait la sensation gustative riche, crémeuse, ample de la composition et que les aliments aromatisés à l'aide de cette composition étaient préférés lors des tests d'évaluation décrits plus loin. En particulier, les compositions aromatisantes obtenues par addition d'un mélange d'acides oléique, palmitique, 4-méthylnonanoïque, 4-méthyloctanoïque, 4-méthylheptanoïque, 2-méthylhexanoïque et 2-méthylbutanoïque donnaient des résultats très appréciés.

Comme il ressort des exemples présentés plus loin, les compositions aromatisantes obtenues en ajoutant à la fraction diglycéridique de l'hydrolysat de beurre, ou de l'une des autres graisses citées, un mélange d'acide butyrique, d'acide décanoïque, d'acide hexanoïque, d'acide octanoïque, d'acide déc-9-énoïque, d'acide 4-méthylnonanoïque, d'acide 4-méthyloctanoïque, d'acide 2-méthylheptanoïque, d'acide oléique, d'acide palmitique, d'acide pentadécanoïque, d'acide 2-méthylhexanoïque, d'acide 2-méthylbutanoïque, d'heptadécanol, d'hexadécanol et de 2-tétradécanone se sont révélées particulièrement efficaces dans l'émulation de la consistance et sensation en bouche des matières grasses présentes notamment dans le beurre et le lait.

Selon une variante de l'invention, on obtient une composition aromatisante en ajoutant à un hydrolysat d'une graisse ou huile animale ou végétale, en particulier à un hydrolysat de beurre, au moins un composé choisi dans le groupe constitué par l'acide butyrique, l'acide décanoïque, l'acide hexanoïque, l'acide octanoïque, l'acide déc-9-énoïque, l'acide 4-méthylnonanoïque, l'acide 4-méthyloctanoïque, l'acide 2-méthylheptanoïque, l'acide oléique, l'acide hexadécanoïque, l'acide pentadécanoïque, l'acide 2-méthylhexanoïque, l'acide 2-méthylbutanoïque, l'heptadécanol, l'hexadécanol et la 2-tétradécanone. Cette variante de la composition selon l'invention résulte du fait que l'on a découvert que l'addition des composés susmentionnés renforçait l'action organoleptique connue de l'hydrolysat de beurre ou d'autres graisses animales ou végétales, rendant la composition aromatisante plus naturelle et crémeuse, aussi plus volumineuse, de sorte que les aliments allégés dans lesquels on incorporait cette composition produisaient une sensation en bouche jugée comparable à celle de l'aliment non allégé.

Selon un mode d'exécution préféré de cette variante, on ajoute à l'hydrolysat de graisse animale ou végétale, ou plus particulièrement de beurre, un mélange constitué par tous les composés susmentionnés. Selon un autre mode d'exécution, on lui ajoute un mélange d'acides oléique, palmitique, 4-méthylnonanoïque, 4-méthyloctanoïque, 2-méthylheptanoïque, 2-méthylhexanoïque et 2-méthylbutanoïque.

Par ailleurs, il a aussi été observé que des résultats particulièrement utiles, d'un point de vue organoleptique, étaient obtenus lorsque l'hydrolysat de graisse ou huile animale ou végétale auquel on ajoutait les composés susmentionnés contenait au moins 30% en poids de diglycérides et pas plus de 2% en poids de monoglycérides, par rapport au poids de l'hydrolysat.

De tels hydrolysats sont obtenus en soumettant la graisse ou huile de départ à une hydrolyse enzymatique dans les conditions particulières décrites plus loin et pendant suffisamment de temps pour obtenir un enrichissement de l'hydrolysat en fraction diglycéridique.

Il a en effet été constaté que, lorsque l'on ajoutait l'un ou plusieurs des composés susmentionnés à un hydrolysat tel que décrit ci-dessus, on obtenait des compositions aromatisantes particulièrement performantes. Leur effet organoleptique de renforcement de la sensation en bouche ou "mouthfeel" des aliments dans lesquels on incorporait ces compositions aromatisantes était encore plus marqué lorsque ledit hydrolysat contenait 50% ou plus en poids de diglycérides.

La composition aromatisante résultant du procédé selon l'invention fait également l'objet de cette dernière et peut être utilisée pour améliorer ou augmenter la sensation en bouche ou "mouthfeel" d'une grande variété de produits alimentaires. On peut citer à titre d'exemple les margarines et beurres allégés ainsi que les yoghourts, les glaces et crèmes glacées, les fromages, le lait et les produits à base de lait ou de dérivés de celui-ci, y compris des boissons, mais aussi des produits alimentaires tels que des plats cuisinés prêts à consommer, des mayonnaises, des soupes, des sauces, des biscuits doux ou salés, des amuse-gueules, en particulier des chips, et encore des desserts.

D'une façon générale, tous les produits alimentaires allégés peuvent être améliorés, du point de vue de leur consistance et de la sensation en bouche, à l'aide de la composition aromatisante selon l'invention.

Bien entendu, quoique la composition aromatisante de l'invention soit particulièrement utile dans l'aromatisation de produits allégés en graisses, il est clair qu'elle peut également être utile pour aromatiser des aliments ordinaires, non allégés, auxquels on veut impartir une consistance plus ample et crémeuse, ou accentuer les attributs organoleptiques liés à la présence des matières grasses. C'est le cas notamment des préparations de type viandeux où les compositions aromatisantes de l'invention à base d'hydrolysats de graisse de boeuf, mouton ou porc, se sont révélées particulièrement utiles et efficaces pour le but recherché.

La concentration dans laquelle cette composition peut être ajoutée aux aliments variés susmentionnés dépend, bien entendu, de la nature de ces derniers et de l'effet aromatisant que l'on désire obtenir. Elle peut donc varier dans une gamme de valeurs étendue. A titre d'exemple, on peut citer des concentrations de 0,001 à 1,0%, par rapport au poids de l'aliment ou boisson auxquels elle est ajoutée.

La composition aromatisante de l'invention peut être ajoutée aux aliments soit seule, soit en mélange avec d'autres ingrédients aromatisants d'usage courant dont l'effet est d'influencer le goût de l'aliment, plutôt que sa consistance ou la sensation en bouche ("mouthfeel").

Comme il a déjà été cité, l'hydrolysat de graisse animale ou végétale, et plus particulièrement de beurre, utilisé soit en tant que constituant de la composition aromatisante selon l'invention, soit comme produit de départ pour obtenir la fraction diglycéridique composante de cette composition, est obtenu par hydrolyse enzymatique de la graisse animale ou végétale, notamment de l'huile de beurre. Cette hydrolyse engendre la formation d'une fraction acide, constituée par les acides gras, à l'état libre, et une fraction neutre contenant ces acides à l'état lié, sous forme de triglycérides, diglycérides et monoglycérides, fractions que l'on peut séparer les unes des autres. Suivant les conditions de l'hydrolyse, la proportion pondérale relative des fractions acide et neutre, ainsi que celle des trois types de glycérides au sein de cette fraction neutre, varie quelque peu. On peut constater, en effet, que des facteurs tels que le temps d'hydrolyse et la nature de l'enzyme utilisé peuvent avoir une influence sur ces proportions et peuvent donc servir à influencer le contenu de l'hydrolysat en la fraction diglycéridique qui se révèle particulièrement utile pour impartir une sensation crémeuse aux produits aromatisés, les fractions triglycéridique et monoglycéridique ayant beaucoup moins d'impact à cet effet. Ceci est d'autant plus le cas pour la fraction monoglycéridique, et les hydrolysats utilisés selon l'invention contiendront, de préférence, moins de 2% en poids de cette dernière.

D'autre part, malgré la présence d'une multitude d'acides gras par exemple dans le beurre [voir, par exemple, H. O. Goff et A. R. Hill, Dairy Science & Technology Handbook, ed. Y. H. Hui, VCH, Publishers Inc., N.Y., vol. 1, page 19 (1993)], et par conséquent à l'état libre dans la fraction acide de l'hydrolysat de beurre, nous avons découvert avec surprise que seule une partie de ces acides semble avoir une fonction déterminante dans l'impact crémeux et riche imparti aux compositions auxquelles ils sont ajoutés, et que l'addition de ces acides particuliers, soit à l'hydrolysat lui-même, soit à la fraction diglycéridique de celui-ci, présentait des avantages évidents par rapport à l'utilisation connue de cet hydrolysat non enrichi en ces acides.

Par ailleurs, l'adjonction d'autres acides à chaîne plus courte, notamment ramifiés, non identifiés dans ces graisses ou présents mais à très faible concentration, ainsi que d'hexadécanol, heptadécanol ou 2-tétradécanone, s'est révélée aussi avantageuse et a permis d'améliorer la sensation de type "mouthfeel" des aliments aromatisés à l'aide des compositions ainsi obtenues.

Dans l'hydrolyse enzymatique de l'huile ou graisse animale ou végétale, on peut utiliser n'importe quelle souche de lipase d'usage courant dans ce type de réaction. Des exemples spécifiques sont cités plus loin, mais l'homme de l'art est à même de choisir cette souche parmi celles qui sont disponibles à cet effet.

C'est ainsi que l'on peut citer à titre d'exemple, des enzymes obtenues à partir de levures du genre Candida et Torulopsis, de moisissures du genre Rhizomucor, Rhizopus, Mucor, Penicillium, Aspergillus, Geotrichum et de bactéries de type Pseudomonas, Achromobacter et autres. On peut trouver dans le commerce de telles lipases appropriées, comme par exemple, Lipase Type XII (Sigma Corp.), Lipase (Boheringer), Enzo Lipase 1000 (EDC), Lipase preparation 7051 L (Rohm Tech.), Palatase (Novo Lab.), Lipase preparation 2212 F (Rohm Tech.), Flavor Age (Genencor), Biolipase (Biocon), Lipase (Chem. Dynamic Corp.), Lipomod (Biocatalysts).

D'une façon générale, la lipase est ajoutée à la matière grasse fondue, le mélange homogénéisé et ensuite incubé à une température appropriée, pendant une période de temps permettant un degré d'hydrolyse de l'ordre d'au moins 25 à 30%. L'hydrolysat ainsi obtenu peut être utilisé tel quel, ou bien émulsifié pour former une pâte homogène. Alternativement, il peut être atomisé ("spray-dried") à l'aide de matières d'encapsulation d'usage courant (protéines, gélatines, caséinates, hydrocolloïdes, dextrines, amidon et amidon modifié, maltodextrines, sucres, etc ...) et selon des méthodes d'encapsulation courantes.

D'autre part, la fraction diglycéridique de ces hydrolysats peut être préparée selon le procédé décrit schématiquement ci-après pour l'hydrolysat de beurre et qui est utilisé de façon générale :

## SCHEMA

```
          ┌─────────────────┐
          │  Hydrolysat de  │
          │     beurre      │
          └─────────────────┘
                   │
               Extraction
                   │
         ┌─────────┴──────────┐
         ↓                    ↓
  ┌─────────────┐      ┌─────────────┐
  │  Fraction   │      │  Fraction   │
  │    acide    │      │   neutre    │
  └─────────────┘      └─────────────┘
                              │
                         Séparation
                    chromatographique
                              │
                 ┌────────────┼────────────┐
                 ↓            ↓             ↓
         ┌──────────────┐ ┌─────────────┐ ┌────────────────┐
         │ Triglycérides│ │ Diglycérides│ │ Monoglycérides │
         └──────────────┘ └─────────────┘ └────────────────┘
```

Les conditions détaillées de ces méthodes sont décrites dans les exemples présentés plus loin.

Des fractions diglycéridiques des autres graisses animales ou végétales susmentionnées peuvent être obtenues de façon similaire à celle décrite ci-dessus pour le beurre.

Les acides gras et composés divers mentionnés plus haut, pouvant être ajoutés aux hydrolysats et/ou à la fraction diglycéridique de ces hydrolysats, sont des produits commerciaux.

Il convient de noter que l'invention fournit ainsi des compositions aromatisantes capables d'améliorer ou d'impartir les caractères organoleptiques généralement associés à la présence des matières grasses dans les aliments, notamment la consistance crémeuse, et la sensation en bouche ("mouthfeel") plus ample et volumineuse. Ainsi, les compositions selon l'invention peuvent remplacer totalement ou partiellement ces matières grasses dans une grande variété d'aliments allégés, mais elles peuvent également servir à renforcer les attributs organoleptiques de ces matières grasses dans les aliments qui en contiennent. Les aliments comprenant les compositions aromatisantes selon l'invention ont plus d'impact et un goût plus durable dans la bouche, ainsi qu'un meilleur "mouthfeel", que les aliments correspondants qui n'ont pas été aromatisés selon l'invention.

**Préparation des hydrolysats**

Exemple 1

Préparation d'un hydrolysat de beurre

Dans un ballon de 500 ml on a mélangé 100 g de gras de beurre, 50 g d'eau déminéralisée et 1 g d'enzyme de type Lipomod® 29 (lipase; origine: Biocatalysts Ltd., Grande-Bretagne). On a bien homogénéisé et agité pendant 17 h à 40-45°C. La température a été montée à 90-95°C et le mélange agité pendant 15 min. On a ensuite séparé par centrifugation les phases aqueuse et huileuse. On a dilué cette dernière avec 1 part de Neobee M 5 (triglycéride d'acide caprique/caprylique ; origine : PVO Int. Inc., NY, USA) et désodorisé partiellement la solution en distillant deux fois à travers un appareil de distillation de type Leybold ("flash-distillation") à 60 et 80°C et à une pression de 13 Pa. L'hydrolysat ainsi obtenu a été utilisé tel quel dans les applications décrites plus loin.

La phase huileuse obtenue directement de l'hydrolyse possédait un caractère organoleptique de type fromage très prononcé et s'est révélée utile en tant que telle pour améliorer la sensation en bouche ("mouthfeel") d'arômes de fromage et d'aliments les contenant.

Exemple 2

Préparation d'une fraction diglycéridique d'un hydrolysat de beurre

On a dissous un hydrolysat de beurre (5,0 g) obtenu comme il est décrit dans l'exemple 1 dans l'éther diéthylique (200 ml). La fraction acide a été extraite avec 5 portions de 20 ml chacune de solution aqueuse 1 N d'hydroxyde de sodium. Les phases aqueuses ont été équilibrées avec une nouvelle portion de 100 ml d'éther. Les phases éthérées combinées ont été lavées deux fois avec une solution saturée de chlorure de sodium, séchées sur sulfate de magnésium et concentrées à poids constant (2,97 g). Cette fraction neutre représentait 60% en poids de l'hydrolysat. Les extraits acides combinés ont été acidifés à pH 1 à l'aide de $H_2SO_4$ aqueux à 50% et de nouveau extraits avec 2 fois 100 ml d'éther. On a lavé la couche éthérée deux fois avec une solution saturée de chlorure de sodium, séché sur sulfate de magnésium et concentré à poids constant (1,98 g). La fraction acide ainsi obtenue représentait 40% en poids de l'hydrolysat. La fraction neutre (2,95 g) a été passée dans une colonne de silica gel de type Lobar (dimension B; origine: Merck) et les composants ont été successivement élués avec des mélanges hexane/acétate d'éthyle 75: 25 (400 ml), 50:50 (300 ml), 25:75 (200 ml) et acétate d'éthyle seul (150 ml). Une chromatographie en couche mince a été effectuée sur des plaques pré-revêtues de gel de silice (Merck) en utilisant un mélange hexane/acétate d'éthyle 70:30 comme éluant. La séparation des phases triglycéridique, diglycéridique et monoglycéridique a été visualisée en atmosphère d'iode, en observant les taches respectives.

Les valeurs $r_f$ de ces trois phases mesurées par chromatographie en couche mince étaient les suivantes :

| triglycérides | $r_f = 0,7$ |
| diglycérides | $r_f = 0,2$-$0,4$ |
| monoglycérides | $r_f = 0,08$ |

Les trois fractions ont été recueillies en récipients distincts et leur composition confirmée par spectroscopie de résonance magnétique nucléaire (RMN).

Les proportions pondérales de ces fractions étaient les suivantes :

| triglycérides | 59,3% |
| diglycérides | 37,3% |
| monoglycérides | 3% |

La phase diglycéridique a été utilisée telle quelle dans les applications décrites ci-après.

La méthode ci-dessus a été utilisée avec d'autres hydrolysats de beurre obtenus par hydrolyse enzymatique effectuée dans les conditions décrites dans l'exemple 1, mais en utilisant d'autres lipases. Les proportions pondérales des différentes fractions obtenues dans ces cas sont indiquées dans le tableau suivant, ainsi que la nature de la lipase :

TABLEAU

| Hydrolysat | Lipase | Fraction acide % | Fraction neutre % | Triglycérides % | Diglycérides % | Monoglycérides % |
|---|---|---|---|---|---|---|
| 2 | Palatase®M[1] | 33 | 64 | 70 | 27 | 1 |

1) origine : Novo Nordisk, Danemark

Exemple 3

Préparation d'hydrolysats de beurre

On a préparé des hydrolysats de beurre selon la méthode générale suivante.

METHODE GENERALE

Dans un ballon à 3 cols de 250 ml, équipé d'un agitateur mécanique et chauffé à l'aide d'un bain d'huile à une température de 40-50°C, on a placé un mélange de 100 g de beurre fondu et d'un émulsifiant dans la quantité désirée (0,1 à 0,2% en poids), ce mélange ayant été bien homogénéisé au préalable dans un appareil de type TURRAX®. On a ajouté un mélange homogénéisé d'eau (quantité nécessaire pour obtenir un bon homogénat, mais en tout cas pas plus de 5% en poids, par rapport au poids de graisse) et l'enzyme voulue dans la quantité désirée et indiquée au tableau ci-après. On a laissé réagir sans agitation et prélevé des échantillons d'hydrolysat afin de mesurer l'indice d'acides (Acid value - A.V.) correspondant et d'obtenir ainsi une estimation du degré d'hydrolyse. Pour ce faire, on a chauffé d'abord l'échantillon pendant 15 min à 90°C pour arrêter l'hydrolyse et ensuite établi l'indice d'acides selon la méthode standard décrite dans "IUPAC - Standard Methods for the Analysis of Oils, Fats and Derivatives, Pergamon Press, 5ème ed., pages 52 et suivantes (1979)". On a ainsi constaté que des hydrolysats de beurre ayant les propriétés organoleptiques désirées pouvaient être obtenus après environ 7 à 8 h d'hydrolyse, leur composition variant cependant en fonction de la nature de l'enzyme utilisée, ainsi que de sa concentration en poids par rapport au poids de beurre fondu. La composition des hydrolysats ainsi obtenus a été établie par chromatographie liquide à haute pression (HPLC).

On a utilisé une colonne de type Nucleosil 7 à diol (longueur 25 cm environ, d.i. 4 mm), c'est-à-dire, où le silice est lié à $-(CH_2)_3-O-CH(OH)-CH_2OH$, en phase normale, et les conditions suivantes :

Solvant A : hexane
Solvant B : 2-propanol
Elution : 1,0 ml/min, % B=8%
Détection : UV (diode array detector - DAD) à 230 nm
Injection : 20 mg (20 μl loop entier)

A chaque fois, la colonne est calibrée au préalable avec la graisse servant à obtenir l'hydrolysat, dans le cas présent le beurre fondu.
Cette méthode a permis d'obtenir directement la concentration de l'hydrolysat de beurre en triglycérides et monoglycérides, l'élution de ces deux types de glycérides étant bien séparée dans le temps. On a ainsi constaté que les hydrolysats obtenus comme il est décrit plus haut contenaient tous moins de 2% en poids de monoglycérides.

Selon cette méthode, l'élution des diglycérides se trouve superposée à celle des acides gras libres formés lors de l'hydrolyse. Ainsi, soit on sépare au préalable les acides gras libres de l'hydrolysat pour obtenir la concentration exacte de celui-ci en diglycérides, soit on estime la concentration de ces derniers à partir du contenu global de l'hydrolysat en diglycérides plus acides gras libres, obtenu par HPLC. En effet, étant donné que l'on sait qu'il n'y a pratiquement pas de formation de monoglycérides, les diglycérides et acides gras libres sont présents dans l'hydrolysat en quantités équimolaires. Dès lors, à partir du rapport poids moléculaire du diglycéride/poids moléculaire (diglycéride + acide gras), qui est une valeur moyenne de 0,69 pour les différents diglycérides et acides gras correspondants caractéristiques des graisses telles que beurre, graisse de mouton, de poulet, de porc, huile d'olive, etc ... (par exemple, ces rapports sont pour oléine : 0,688 ; capréine : 0,699 ; stéarine : 0,688 ; palmitine : 0,689 ; caproine : 0,713), on peut calculer la concentration de diglycérides. Ainsi, par exemple, dans un hydrolysat de beurre dont le contenu en triglycérides mesuré était de 60%, la concentration en diglycérides a été estimée à environ (100-60) x 0,69 = 27,6%.
On a ainsi calculé les contenus en diglycérides cités dans le Tableau présenté ci-après.

Selon la méthode générale décrite ci-dessus, on a préparé les hydrolysats de beurre cités au Tableau ci-après (émulsifiant: 0,2 g de DIMODAN PV, origine : Grindsted Products A/S, Danemark). Ces hydrolysats présentaient les qualités organoleptiques appropriées pour le but de l'invention.

TABLEAU

| ENZYME OU LEVURE | | Durée d'hydrolyse h | HYDROLYSAT | | | |
|---|---|---|---|---|---|---|
| Nature | Concentration[a] | | Indice d'acides (A.V.) | COMPOSITION [b] | | N° |
| | | | | Triglycérides % | Diglycérides % | |
| Candida Cilindracea * | 0,2 | 7 | 95 | 20 | 55 | 1 |
| Candida Cilindracea * | 0,1 | 7 | 70 | 41 | 41 | 2 |
| Candida Cilindracea * | 0,05 | 7 | 37 | 59 | 28 | 3 |
| Lipomod 187 P * | 0,2 | 7 | 49 | 42 | 40 | 4 |
| Pseudomonas Fluorescens * | 0,2 | 7 | 66 | 18 | 57 | 5 |

a) % en poids, par rapport au poids de beurre fondu

b) % en poids, par rapport au poids de l'hydrolysat

* origine : Biocatalysts Ltd.

Exemple 4

Préparation d'hydrolysats de graisse de mouton

On a préparé des hydrolysats de graisse de mouton en utilisant la méthode générale décrite à l'Exemple 3 et en remplaçant le beurre par la graisse de mouton. Le Tableau ci-après résume les caractéristiques des hydrolysats obtenus, en utilisant en tant qu'émulsifiant du DIMODAN PV (0,1 ou 0,2%), lesquels hydrolysats se sont révélés utiles pour préparer les compositions aromatisantes selon l'invention.

TABLEAU

| ENZYME OU LEVURE | | Durée d'hydrolyse h | HYDROLYSAT | | | |
|---|---|---|---|---|---|---|
| Nature | Concentration[a] | | Indice d'acides (A. V.) | COMPOSITION [b] | | N° |
| | | | | Triglycérides % | Diglycérides % | |
| Palatase M1000* | 2,0 | 8 | 37 | 49 | 35 | 1 |
| Palatase M 1000* | 8,0 | 8 | - | 47 | 37 | 2[c] |
| Pseudomonas Fluorescens ** | 0,15 | 8 | 62 | 29 | 49 | 3 |

a) % en poids, par rapport au poids de graisse de mouton

b) % en poids, par rapport au poids de l'hydrolysat

c) concentration de l'émulsifiant : 0,1% en poids

* origine : Novo Nordisk

* * origine : Biocatalysts Ltd.

TABLEAU (suite)

| ENZYME OU LEVURE | | Durée d'hydrolyse h | HYDROLYSAT | | | |
|---|---|---|---|---|---|---|
| Nature | Concentration[a) | | Indice d'acides (A. V.) | COMPOSITION [b) | | N° |
| | | | | Triglycérides % | Diglycérides % | |
| Candida Cilindracea ** | 0,20 | 8 | 69 | 22 | 54 | 4 |
| Lipomod 187 P ** | 0,20 | 8 | 43 | 43 | 38 | 5 |
| Mucor Michi ** | 0,45 | 8 | 53 | 42 | 40 | 6 |
| Sigma L 3126 *** | 0,30 | 8 | 32 | 52 | 33 | 7 |
| Palatase M 1000 *<br><br>Lipomod 187 P** | 4,0<br><br>1,0 | 24 | - | 61 | 27 | 8[c) |
| Palatase M 1000*<br><br>Lipomod 187 P** | 6,0<br><br>1,5 | 8 | - | 12 | 61 | 9[c) |

a) % en poids, par rapport au poids de graisse de mouton

b) % en poids, par rapport au poids de l'hydrolysat

c) concentration de l'émulsifiant : 0,1% en poids

* origine : Novo Nordisk

* * origine : Biocatalysts Ltd.

*** origine : Sigma Corp.

Exemple 5

Préparation d'hydrolysats de graisses animales ou végétales

On a préparé, selon la méthode générale décrite à l'Exemple 3, plusieurs hydrolysats de graisses variées, dans les conditions indiquées au Tableau ci-après. Sauf indication contraire, on a utilisé comme émulsifiant du DIMODAN PV à 0,1% en poids.

TABLEAU

| ENZYME OU LEVURE | | Durée hydrolyse h | HYDROLYSAT | | | | |
|---|---|---|---|---|---|---|---|
| Nature | Concentration a) | | Type de graisse | Indice d'acides (A.V.) | COMPOSITION b) | | N° |
| | | | | | Triglydérides % | Diglycérides % | |
| Palatase M1000* | 2,0 | 8 | beurre | - | 53 | 32 | 1 |
| Palatase M 1000 * | 8,0 | 8 | beurre | - | 52 | 33 | 2c) |
| Palatase M 1000 * | 8,0 | 8 | beurre | - | 49 | 35 | 3d) |
| Palatase M1000* | 8,0 | 24 | beurre | - | 26 | 51 | 4d) |
| Palatase M 1000* | 8,0 | 8 | beurre | - | 31 | 48 | 5 |
| Palatase M 1000* | 8,0 | 24 | beurre | - | 19 | 56 | 6 |
| Palatase M 1000 * | 2,0 | 24 | beurre | - | 47 | 37 | 7 |
| Lipomod 187 P** | 0,5 | | | | | | |
| Palatase M 1000 * | 4,0 | 8 | beurre | - | 36 | 44 | 8 |
| Lipomod 187 P** | 1,0 | | | | | | |
| Palatase M 1000 * | 6,0 | 8 | beurre | - | 12 | 61 | 9 |
| Lipomod 187 P** | 1,5 | | | | | | |
| Candida Cilindracea** | 0,2 | 8 | huile d'olive | 94 | 24 | 51 | 10 |
| Candida Cilindracea** | 0,2 | 8 | huile arachide | 92,6 | 35 | 45 | 11 |
| Candida Cilindracea** | 0,2 | 8 | Poulet | 99,0 | 20 | 55 | 12 |
| Candida Cilindracea** | 0,2 | 8 | beurre de cacao | 88,0 | 21 | 55 | 13 |

a) % en poids, par rapport au poids de graisse

b) % en poids, par rapport au poids de l'hydrolysat

* origine : Novo Nordisk

c) émulsifiant : 2% en poids de protéine de beurre

d) émulsifiant : 0,1% en poids de lécithine

* * origine : Biocatalysts Ltd.

TABLEAU

| ENZYME OU LEVURE | | Durée hydrolyse h | HYDROLYSAT | | | | |
|---|---|---|---|---|---|---|---|
| Nature | Concentration a) | | Type de graisse | Indice d'acides (A.V.) | COMPOSITION b) | | N° |
| | | | | | Triglydérides % | Diglycérides % | |
| Palatase M 1000 * | 8,0 | 8 | huile d'olive | - | 41 | 41 | 14 |
| Palatase M 1000* | 8,0 | 8 | huile d'olive | - | 45 | 38 | 15[d] |
| Palatase M 1000 * Lipomod 187 P** | 6,0 1,5 | 8 | huile d'olive | - | 40 | 41 | 16 |
| Palatase M 100* | 8,0 | 8 | poulet | - | 46 | 37 | 17[d] |
| Palatase M 1000* | 8,0 | 8 | poulet | - | 33 | 46 | 18 |
| Palatase M 1000* Lipomod 187 P** | 4,0 1,0 | 8 | poulet | - | 24 | 52 | 19 |
| Palatase M 1000* Lipomod 187 P** | 6,0 1,0 | 8 | poulet | - | 15 | 59 | 20 |
| Palatase M 1000* | 8,0 | 8 | boeuf | - | 38 | 43 | 21 |
| Palatase M 1000 * Lipomod 187 P** | 6,0 1,5 | 8 | boeuf | - | 45 | 38 | 22 |
| Palatase M 1000* | 8,0 | 8 | porc | - | 59 | 28 | 23[d] |
| Palatase M 1000 * | 8,0 | 8 | porc | - | 37 | 43 | 24 |
| Palatase M 1000* | 8,0 | 8 | porc | - | 42 | 40 | 25 [e] |

a) % en poids, par rapport au poids de graisse

b) % en poids, par rapport au poids de l'hydrolysat

* origine : Novo Nordisk

d) émulsifiant : 0,1% en poids de lécithine

e) émulsifiant : 0,1% en poids de TRIODAN ; origine : Grinsted Products

* * origine : Biocatalysts Ltd.

TABLEAU

| ENZYME OU LEVURE | | Durée hydrolyse h | HYDROLYSAT | | | | |
|---|---|---|---|---|---|---|---|
| Nature | Concentration a) | | Type de graisse | Indice d'acides (A.V.) | COMPOSITION b) | | N° |
| Palatase M 1000 * | 4,0 | 8 | porc | - | 27 | 50 | 26 |
| Lipomod 187 P** | 1,0 | | | | | | |
| Palatase M 1000 * | 6,0 | 8 | porc | - | 25 | 52 | 27 |
| Lipomod 187 P** | 1,5 | | | | | | |

a) % en poids, par rapport au poids de graisse

b) % en poids, par rapport au poids de l'hydrolysat

* origine : Novo Nordisk

* * origine : Biocatalysts Ltd.

Les hydrolysats cités dans ce tableau se sont révélés utiles pour impartir des caractères crémeux, graisse et "mouthfeel" recherchés aux compositions aromatisantes selon l'invention.

L'invention sera maintenant décrite plus en détail à l'aide des exemples suivants.

**Manières de réaliser l'invention**

Exemple 6

Compositions aromatisantes

On a préparé une composition aromatisante de base, de type beurre, avec les ingrédients suivants :

| Ingrédients | Parties en poids |
|---|---|
| Acétylméthylcarbinol | 40 |
| Acide butyrique redist. | 20 |
| Acide hexanoïque redist. | 30 |
| Acide décanoïque redist. | 15 |
| 5-Décanolide | 80 |
| Diacétyle | 50 |
| Neobee M 5 | 765 |
| Total | 1000 |

Cette composition de base (130 ppm), et les ingrédients indiqués au Tableau ci-après, ont été ajoutés dans les proportions citées à des solutions aqueuses salines à 0,5% de NaCl, pour évaluation.

TABLEAU

| Ingrédients | Solutions (ppm) | | | | | | | |
|---|---|---|---|---|---|---|---|---|
| | A | B | C | D | E | F | G | H |
| Composition de base | 100 | 100 | 100 | 100 | 100 | 100 | 100 | 100 |

TABLEAU   (suite)

| Ingrédients | Solutions (ppm) | | | | | | | |
|---|---|---|---|---|---|---|---|---|
| | A | B | C | D | E | F | G | H |
| Hydrolysat de beurre [1] (HB) | 30 | - | 23 | 23 | 23 | - | - | 15 |
| Fraction diglycéridique de HB [2] | - | 30 | 7 | - | - | 15 | 15 | 5 |
| 1-Hexadécanol | - | - | - | 7 | - | 15 | - | 5 |
| 2-Tétradécanone | - | - | - | - | 7 | - | 15 | 5 |

1) voir notamment exemple 1 ou exemple 3, hydrolysat n° 1 ou exemple 5, hydrolysat n° 4 ou n° 6.

2) voir exemple 2

Les solutions aromatisées ainsi préparées ont été évaluées à l'aveugle par un panel de 15 experts aromaticiens lesquels devaient juger la qualité organoleptique d ces solutions entre elles et par rapport à la solution de la composition de base.

De l'avis unanime des aromaticiens, les solutions A et B possédaient un goût plus crémeux, beurre que celui de la composition de base, avec une meilleure sensation en bouche ("mouthfeel") et une note gustative plus fraîche, de type laitier. L'effet de ces compositions dans la bouche était aussi plus durable. D'autre part, toutes les solutions A à H ont été préférées par une majorité d'aromaticiens, par rapport à la composition de base, les solutions C et H ayant été particulièrement appréciées.

Des résultats semblables ont été obtenus lorsque les ingrédients cités au Tableau ont été ajoutés, dans les mêmes proportions, à une margarine ayant une faible teneur en matières grasses (25%; origine : Migros, Suisse).

Exemple 7

Aromatisation de lait écrémé

On a aromatisé du lait écrémé non aromatisé (0% matières grasses ; origine : Valflora®, Migros, Suisse) en lui ajoutant les ingrédients indiqués ci-après, dans les proportions citées, pour obtenir cinq échantillons de lait aromatisé :

| Ingrédients | Echantillons (ppm) | | | | |
|---|---|---|---|---|---|
| | A | B | C | D | E |
| Fraction diglycéridique de HB [1] | 500 | 500 | 500 | 500 | 500 |
| Acide 9-décénoïque | - | 1 | - | - | - |
| Acide 4-méthylnonanoïque | - | - | 4 | - | - |
| Acide 4-méthyloctanoïque | - | - | - | 2 | - |
| Adde 2-méthylheptanoïque | - | - | - | - | 4 |

1) voir exemple 2

Les échantillons A à E ainsi obtenus ont été comparés à l'aveugle avec un échantillon de lait écrémé non aromatisé, par un panel de douze aromaticiens, lesquels devaient indiquer leur préférence eu égard au "mouthfeel" et au caractère gustatif des échantillons.

Tous les aromaticiens ont préféré les échantillons A à E à celui du lait non aromatisé. A leur avis, ces échantillons avaient beaucoup plus d'impact dans la bouche. Les échantillons C, D et E ont été particulièrement préférés, leur goût étant jugé semblable, aussi bien en caractère et en consistance, au goût d'un lait non écrémé.

Exemple 8

Aromatisation de lait écrémé

On a aromatisé du lait écrémé non aromatisé (0% matières grasses ; origine : Migros, Suisse) en lui ajoutant les ingrédients indiqués ci-après, dans les proportions citées, pour obtenir cinq échantillons de lait aromatisé :

| Ingrédients | Echantillons (ppm) | | | | |
|---|---|---|---|---|---|
| | A | B | C | D | E |
| Fraction diglycéridique de HB [1] | 500 | 500 | 500 | 500 | 500 |
| Acide butyrique | - | 6 | - | - | - |
| Acide hexanoïque | - | - | 2 | - | - |
| Acide octanoïque | - | - | - | 4 | - |
| Acide décanoïque | - | - | - | - | 2 |

1) voir exemple 2

Les échantillons A à E ainsi obtenus ont été comparés à l'aveugle avec un échantillon de lait écrémé non aromatisé, par un panel d'experts aromaticiens, lesquels devaient indiquer leur préférence eu égard au "mouthfeel" et au caractère gustatif des échantillons.

Tous les aromaticiens ont préféré les échantillons A à E à celui du lait non aromatisé. Parmi ces échantillons, on a constaté une préférence marquée pour les échantillons C, D et E. De l'avis des aromaticiens, ils possédaient tous un goût crémeux, frais, lait et une note beurre plus naturelle et moins grasse que celle de l'échantillon B.

Exemple 9

Aromatisation de lait écrémé

On a aromatisé du lait écrémé non aromatisé (0% matières grasses ; origine : Migros, Suisse) en lui ajoutant les ingrédients indiqués ci-après, dans les proportions citées, pour obtenir cinq échantillons de lait aromatisé :

| Ingrédients | Echantillons (ppm) | | | | |
|---|---|---|---|---|---|
| | A | B | C | D | E |
| Fraction diglycéridique de HB[1] | 500 | 500 | 500 | 500 | 500 |
| Acide 2-méthylhexanoïque | - | 2 | - | - | - |
| Acide 2-méthylbutanoïque | - | - | 3 | - | - |
| Acide 9-décénoïque | - | - | - | 0,1 | - |
| Acide diméthylacrylique | - | - | - | - | 2 |

1) voir exemple 2

On a évalué ces échantillons dans les conditions décrites dans les exemples précédents. De nouveau, tous les échantillons A à E ont été préférés à celui de lait écrémé non aromatisé. A leur avis, les échantillons B et C en particulier possédaient un goût très crémeux, donnant une sensation d'ampleur et de volume dans la bouche très marquée.

Exemple 10

Aromatisation de lait écrémé

On a préparé trois mélanges aromatisants à l'aide des ingrédients suivants, ajoutés dans les proportions indiquées (parties en poids) :

| Ingrédients | Mélanges | | |
|---|---|---|---|
| | A | B | C |
| 2-Tétradécanone | 30 | 50 | - |
| Acide butyrique redist. | 30 | 30 | - |
| Acide hexanoïque redist. | 20 | 20 | - |

(suite)

| Ingrédients | Mélanges | | |
|---|---|---|---|
| | A | B | C |
| Acide octanoïque redist. | 40 | 20 | - |
| Acide décanoïque redist. | 20 | 20 | - |
| Acide 9-décénoïque | 40 * | 40 * | - |
| Acide 4-méthyloctanoïque | 20 * | 20 ** | 20 ** |
| Acide 4-méthylnonanoïque | 40 * | 40 ** | 40 ** |
| Acide 2-méthylheptanoïque | 40 | 30 | 30 |
| Acide oléique | 500 | 490 | 100 |
| Acide pentadécanoïque | 40 | 40 | 40 |
| Acide hexadécanoïque | 40 | 40 | - |
| Hexadécanol | 60 | 60 | - |
| Heptadécanol | 30 | 50 | - |
| Acide 2-méthylhexanoïque | 20 | 20 | 20 |
| Acide 2-méthylbutanoïque | 30 | 30 | 30 |
| Neobee M 5 | - | - | 720 |
| | | | |
| Total | 1000 | 1000 | 1000 |

* solution à 10% dans le Neobee M 5

* * solution à 1% dans le Neobee M 5

Avec ces mélanges et les ingrédients cités ci-après, on a préparé des échantillons de lait écrémé aromatisé, en ajoutant à un lait écrémé non aromatisé (0% matières grasses ; origine : Migros, Suisse) les ingrédients ci-après, dans les proportions indiquées (ppm) :

| Ingrédients | Echantillons | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Hydrolysat de beurre (HB)[1] | 2000 | - | 2000 | - | 2000 | 2000 | 2000 | - | - | - | 2000 | - |
| Fraction diglycéridique de HB [2] | - | 2000 | - | 2000 | - | - | - | 2000 | 2000 | 2000 | - | 2000 |
| Mélange A | - | - | 100 | 100 | - | - | - | - | - | - | - | - |
| Mélange B | - | - | - | - | 30 | 60 | 100 | 30 | 60 | 100 | - | - |
| Mélange C | - | - | - | - | - | - | - | - | - | - | 30 | 100 |

1) voir hydrolysats cités à l'exemple 6 notamment

2) voir exemple 2

Dans un premier test d'évaluation à l'aveugle, un panel d'experts aromaticiens a comparé les échantillons 1 à 4 entre eux et avec un échantillon de lait écrémé non aromatisé.

De l'avis général des aromaticiens, les quatre échantillons étaient meilleurs, du point de vue de la sensation en bouche (mouthfeel) et de l'impression crémeuse impartie, que celui du lait non aromatisé.

Quoique les échantillons 3 et 4 aient été préférés pour leur mouthfeel, leur goût était jugé avoir un caractère fromage trop prononcé pour un échantillon de lait, et de ce fait, la note gustative des échantillons 1 et 2 a été préférée par une majorité d'aromaticiens.

Le panel a ensuite évalué à l'aveugle les échantillons 5 à 12, en les comparant entre eux et avec un échantillon non aromatisé. De nouveau, les aromaticiens ont jugé que tous les échantillons possédaient une consistance beaucoup plus crémeuse et pleine, volumineuse, que le lait non aromatisé et étaient de ce fait préférés à celui-ci. Les échantillons 5 et 10-12, par ailleurs, ont été particulièrement préférés, leur goût ayant été jugé comparable en "mouthfeel" à celui d'un lait non écrémé.

Exemple 11

Aromatisation de margarine

On a ajouté à une margarine "low fat" du commerce (40% de matières grasses ; origine : Migros, Suisse) 0,2% d'une composition aromatisante selon l'invention contenant les ingrédients suivants, dans les proportions indiquées (parties en poids) :

| Ingrédients | Compositions | | | |
|---|---|---|---|---|
| | W | X | Y | Z |
| Arôme de type beurre[1] | 910 | 910 | 910 | 910 |
| Hydrolysat de beurre (HB)[2] | 90 | - | 88,6 | - |
| Fraction diglycéridique de HB[3] | - | 90 | - | 85,5 |
| Mélange B ou C[4] | - | - | 1,4 | 4,5 |
| Total | 1000 | 1000 | 1000 | 1000 |

1) 700051.05 P ; origine : Firmenich SA, Genève, Suisse

2) voir exemple 6

3) voir exemple 2

4) voir exemple 10

On a ainsi obtenu 4 échantillons de margarine aromatisés lesquels ont ensuite été évalués à l'aveugle par un panel de douze aromaticiens et comparés à la margarine du commerce.

Les résultats de ces évaluations ont montré que les échantillons aromatisés selon l'invention étaient systématiquement préférés à la margarine commerciale, avec une nette préférence pour les échantillons contenant les compositions Y et Z. De l'avis des aromaticiens, ces derniers possédaient un goût beurre beaucoup plus crémeux et arrondi et une sensation "mouthfeel" semblable à celle d'une margarine non allégée en graisses.

Exemple 12

Aromatisation de mayonnaise

A une mayonnaise commerciale (33% de matières grasses ; origine : Migros, Suisse) on a ajouté 0,2% en poids de quatre compositions aromatisantes selon l'invention contenant les ingrédients suivants (parties en poids) :

| Ingrédients | Compositions | | | |
|---|---|---|---|---|
| | W | X | Y | Z |
| Arôme de type mayonnaise [1] | 850 | 850 | 850 | 850 |
| Hydrolysat de beurre (HB)[2] | 150 | - | 147,7 | 142,5 |

1) 588 560 SPM ; origine : Firmenich SA, Genève, Suisse

2) voir exemple 6

(suite)

| Ingrédients | Compositions | | | |
|---|---|---|---|---|
| | W | X | Y | Z |
| Fraction diglycéridique de HB[3] | - | 150 | - | - |
| Mélange B ou C [4] | - | - | 2,3 | 7,5 |
| Total | 1000 | 1000 | 1000 | 1000 |

3) voir exemple 2

4) voir exemple 10

Les quatre échantillons de mayonnaise ont été jugés à l'aveugle par un panel d'experts aromaticiens, lesquels ont unanimement choisi ces échantillons par rapport à la mayonnaise commerciale. A leur avis, les mayonnaises aromatisées étaient plus crémeuses et plus naturelles que cette dernière, et l'amélioration de la consistance et du "mouthfeel" du produit était particulièrement remarquable dans les échantillons aromatisés avec les compositions Y et Z.

Ces effets ont aussi été observés, mais de façon encore plus accentuée, dans une mayonnaise à 0% de matières grasses, préparée de façon conventionnelle à l'aide des ingrédients suivants :

| Ingrédients | % |
|---|---|
| Eau | 78,00 |
| Poudre de lait écrémé | 4,00 |
| Vinaigre | 5,74 |
| Gommes | 3,70 |
| Sucre | 3,00 |
| Amidon de pomme de terre modifié | 3,00 |
| Sel | 1,50 |
| Moutarde | 0,75 |
| Acide lactique | 0,13 |
| Acide citrique | 0,14 |
| Benzoate de sodium | 0,02 |
| Sorbate de potassium | 0,02 |
| Total | 100,00 |

Lorsqu'on a ajouté à la mayonnaise ainsi obtenue 0,3% en poids des compositions aromatisantes analogues à celles citées ci-dessus, mais dans lesquelles l'arôme de mayonnaise était présent à raison de 40% en poids et le total des autres ingrédients à 60% en poids, le rapport pondéral relatif de ces derniers étant identique, on a constaté que les mayonnaises aromatisées, en particulier avec les compositions de type Y et Z, avaient un goût tout à fait naturel et une consistance comparable à celle d'une mayonnaise non allégée, et avaient aussi plus d'impact dans la bouche. Les compositions aromatisantes réussissaient donc à remplacer, en ce qui concerne les propriétés gustatives, les matières grasses dans la mayonnaise sans altérer les autres qualités organoleptiques du produit.

Exemple 13

Aromatisation de chips

On a préparé des chips de façon conventionnelle à l'aide des ingrédients suivants :

| Ingrédients | Poids (g) |
|---|---|
| Poudre de pomme de terre | 100,0 |
| Huile de beurre | 50,0 |
| Sucre | 30,0 |

(suite)

| Ingrédients | Poids (g) |
|---|---|
| Sel | 7,5 |
| Lécitine | 3,0 |
| Amidon de maïs | 30,0 |
| Levure en poudre | 25,0 |
| Amidon de pomme de terre modifié | 200,0 |
| Eau | 400,0 |
| Total | 845,5 |

Les chips ainsi obtenues, contenant moins de 4% d'humidité et dont la teneur en matières grasses ne dépassait pas les 10%, ont été aromatisées avec 4% en poids de quatre compositions aromatisantes préparées de façon analogue à celle décrite dans l'exemple précédent mais en utilisant un mélange aromatique préparé avec les ingrédients suivants :

| Ingrédients | Parties en poids |
|---|---|
| Arôme de pomme de terre[1] | 0,25 |
| Maltodextrine | 49,75 |
| Sel | 40,00 |
| Arôme de graisse[2] | 7,50 |
| Autres * | 2,50 |
| Total | 100,00 |

* ingrédients autres que l'arôme, tels que cités à l'exemple précédent, dans les mêmes proportions relatives.

1) 709001.10 THP 05.93 ; origine : Firmenich SA, Genève, Suisse

2) 92180.04 TP 06.93 ; origine : Firmenich SA, Genève, Suisse

Lors des tests d'évaluation des quatres échantillons de chips aromatisées avec des compositions de type W, X, Y et Z, il a été constaté que ces chips avaient un goût plus naturel, arrondi et semblable au goût des chips à teneur en graisse normale ($\sim$ 30%) que les chips non aromatisées. Elles présentaient en plus l'avantage de ne pas être grasses au toucher, tout en ayant les mêmes qualités organoleptiques que les chips non allégées disponibles commercialement.

Exemple 14

Aromatisation de biscuits sablés

On a aromatisé des biscuits sablés à faible teneur en graisses (24% en poids) en leur ajoutant 0,20% en poids de quatre compositions aromatisantes de type beurre, analogues aux compositions décrites dans l'exemple 11, mais contenant environ 98% d'arôme de beurre et 2% de poids global d'autres ingrédients, présents dans les mêmes proportions pondérales relatives. Le panel de douze aromaticiens qui a évalué à l'aveugle ces quatre échantillons de biscuits aromatisés, par rapport à l'échantillon non aromatisé, a montré une préférence unanime pour les premiers. En particulier, les biscuits aromatisés à l'aide des compositions de type X, Y et Z ont été jugés très savoureux et d'un goût plein et moelleux, que l'on ne distinguait pas dans celui des biscuits sablés préparés au beurre.

Exemple 15

Aromatisation de puddings à la vanille et au chocolat

On a préparé un pudding à la vanille ou au chocolat avec 0% de matières grasses, de façon conventionnelle, à l'aide des ingrédients suivants :

| Ingrédients | Poids (g) |
|---|---|
| Sucre granulé fin | 69,10 |
| Dariloid® QH[1] | 3,00 |
| Pyrophosphate de tétrasodium en poudre | 1,30 |
| Sulfate de calcium dihydraté | 0,70 |
| Sel | 0,40 |
| Colorant alimentaire | 0,47 |
| Vanilline | 0,03 |
| Arôme de vanille ou de chocolat [2] | 0,60 |
| Total | 75,60 |

1) alginate ; origine : Kelco International GmbH, Allemagne

2) Vanille 54.286 BP0551 ou chocolat 503.313 AP0551;origine : Firmenich SA, Genève, Suisse

A ce pudding déjà aromatisé, on a ajouté à raison de 0,3% une composition aromatisante selon l'invention contenant les ingrédients suivants (parties en poids) :

| Ingrédients | Parties en poids |
|---|---|
| Arôme de vanille ou de chocolat[1] | 983,0 |
| Composant HB [2] | 16,4 |
| Mélange B ou C[3] | 0,6 |
| Total | 1000,0 |

1) voir ci-dessus

2) hydrolysat de beurre ou fraction diglycéridique, ou un mélange des deux à proportions égales

3) voir exemple 10

Lors de l'évaluation à l'aveugle des puddings par un panel de six aromaticiens, ces derniers ont préféré à l'unanimité le pudding contenant la composition aromatisante selon l'invention, le jugeant plus crémeux, avec une consistance accrue et un goût plus riche et arrondi, plus durable aussi dans la bouche.

Exemple 16

Dessert glacé

On a préparé un dessert glacé à l'aide des ingrédients suivants :

| Ingrédients | % en poids |
|---|---|
| Lait écrémé (0% matières grasses) | 71,527 |
| Litesse® [1] | 11,000 |
| Sorbex® RS[2] | 6,000 |
| Poudre de lait écrémé | 5,000 |
| Glucidex® 12[3] | 4,000 |
| Paselli® SA$_2$[4] | 2,000 |
| Meyprogen® IC 304[5] | 0,400 |
| Aspartame® [6] | 0,073 |
| Total | 100,000 |

1) remplaçantdu sucre ; origine : Pfizer AG, Zürich, Suisse

2) sorbitol ; origine : Hefti AG, Zürich , Suisse

3) maltodextrine ; origine : Roquette Frères, Lestrem, France

4) amidon modifié ; origine Avebe International, Foxhol, Hollande

5) émulsifiant ; origine : Meyhall Chemical AG, Kreuzlingen, Suisse

6) origine : Nutrasweet AG, Zug, Suisse

Ces ingrédients ont été mélangés et le dessert congelé selon les méthodes usuelles. Parallèlement on a préparé un dessert aromatisé selon l'invention, en ajoutant au dessert susmentionné, avant sa congélation, 0,3% de la composition aromatisante selon l'invention décrite dans l'exemple précédent.

Les deux desserts glacés ont ensuite été évalués à l'aveugle par un panel d'experts aromaticiens, lesquels ont unanimement préféré le dessert aromatisé selon l'invention. A leur avis, son goût avait plus d'impact dans la bouche et était plus durable et crémeux, avec un mouthfeel amélioré.

Exemple 17

Fromage de lait de vache frais

On a préparé un fromage de base au lait de vache avec les ingrédients suivants, selon des méthodes conventionnelles :

| Ingrédients | Poids |
|---|---|
| Lait | 961,0 |
| Chlorure de calcium | 38,0 |
| Rennet 1/15000 | 1,0 |
| Total | 1000,0 |

Parallèlement, on a préparé des fromages aromatisés selon l'invention, en ajoutant au fromage de base 0,1% d'une composition aromatisante préparée à l'aide des ingrédients suivants (parties en poids) :

| Ingrédients | Fromages | |
|---|---|---|
| | A | B |
| Arôme de type mozzarella [1] | 65 | 65 |
| Composant HB[2] | 35 | 33 |
| Mélange B ou C [3] | - | 2 |
| Total | 100 | 100 |

1) 588 537 SPM ; origine : Firmenich SA, Genève, Suisse
2) voir exemple 15
3) voir exemple 10

Les fromages A et B, ainsi que le fromage de base, ont ensuite été évalués à l'aveugle par un panel d'aromaticiens. De l'avis de ces derniers, les fromages A et B étaient nettement supérieurs, d'un point de vue gustatif, au fromage de base. Ils avaient une consistance plus riche et crémeuse et un meilleur impact et "mouthfeel".

Exemple 18

Aromatisation d'une boisson au chocolat

On a préparé une boisson au chocolat de base en mélangeant selon des méthodes conventionnelles, les ingrédients suivants :

| Ingrédients | % |
|---|---|
| Lait partiellement écrémé | 85,60 |
| Lait condensé sucré | 3,00 |
| Sucre | 8,00 |
| Chocolat noir en morceaux | 1,30 |
| Poudre de cacao à 10% de mat. grasses | 1,20 |
| Grinsted P-Fibre 150-F [1] | 0,40 |
| Subi SC-2 [2] | 0,30 |
| Lygomme F447[3] | 0,10 |

(suite)

| Ingrédients | % |
|---|---|
| Vanilline | 0,10 |
| Total | ‾100,00 |

1) origine : Grinsted Products A/S, Brabrand, Danemark
2) émulsifiant ; origine : Dr. Otto Suwelack, Billerbeck, Allemagne
3) stabilisateur ; origine : Sanofi Bio Industries, Paris, France

Cette boisson de base a été aromatisée à l'aide d'une composition aromatisante contenant les ingrédients suivants :

| Ingrédients | Parties en poids |
|---|---|
| Arôme de chocolat [1] | 986,0 |
| Composant HB [2] | 13,5 |
| Mélange B ou C [3] | 0,5 |
| Total | ‾1000,0 |

1) chocolat 503.313 AP0551; origine : Firmenich SA, Genève, Suisse
2) voir exemple 15
3) voir exemple 10

Lorsqu'on a ajouté à la boisson de base 0,35% en poids de cette composition aromatisante, on a obtenu une nouvelle boisson dont le goût avait beaucoup plus d'impact et une meilleure sensation en bouche.

Exemple 19

Aromatisation de bouillons de type viandeux

On a préparé des bouillons de base de type poulet, mouton, porc et boeuf en utilisant des cubes d'origine commerciale appropriés.
Ces bouillons de base ont ensuite servi a préparer des bouillons aromatisés, par addition des ingrédients suivants, dans les proportions indiquées.

| Ingrédients | Bouillons aromatisés (type) | | | | | | | |
|---|---|---|---|---|---|---|---|---|
| | POULET (parties en poids) | | MOUTON (parties en poids) | | BOEUF (parties en poids) | | PORC (parties en poids) | |
| | A | B | C | D | E | F | G | H |
| Bouillon de base | 99,70 | 99,70 | 99,70 | 99,70 | 99,70 | 99,70 | 99,70 | 99,70 |
| Arôme approprié * | 0,03 | 0,03 | 0,03 | 0,03 | 0,03 | 0,03 | 0,03 | 0,03 |
| Hydrolysat de graisse approprié ** | - | 0,27 | - | 0,27 | - | 0,27 | - | 0,27 |

* Bouillon de poulet : arôme de type poulet n° 569 257 TH ;
origine : Firmenich SA, Genève, Suisse
Bouillon de mouton : arôme de type mouton n° 700042.50 SPM ;
origine : Firmenich SA, Genève, Suisse
Bouillon de boeuf : arôme de type boeuf n° 700138.01 SPM ;
origine : Firmenich SA, Genève, Suisse
Bouillon de porc : arôme de type jambon n° 700158.02 TH ;
origine : Firmenich SA, Genève, Suisse
* * Bouillon de poulet : par exemple, hydrolysat n° 18, exemple 5
Bouillon de mouton : par exemple, hydrolysat n° 1, 4 ou 9, exemple 4
Bouillon de boeuf : par exemple, hydrolysat n° 22, exemple 5
Bouillon de porc : par exemple, hydrolysat n° 25 ou 29, exemple 5

(suite)

| Ingrédients | Bouillons aromatisés (type) | | | | | | | |
|---|---|---|---|---|---|---|---|---|
| | POULET (parties en poids) | | MOUTON (parties en poids) | | BOEUF (parties en poids) | | PORC (parties en poids) | |
| | A | B | C | D | E | F | G | H |
| Arôme approprié * | 0,03 | 0,03 | 0,03 | 0,03 | 0,03 | 0,03 | 0,03 | 0,03 |
| Hydrolysat de graisse approprié ** | - | 0,27 | - | 0,27 | - | 0,27 | - | 0,27 |

\* Bouillon de poulet : arôme de type poulet n° 569 257 TH ;
origine : Firmenich SA, Genève, Suisse
Bouillon de mouton : arôme de type mouton n° 700042.50 SPM ;
origine : Firmenich SA, Genève, Suisse
Bouillon de boeuf : arôme de type boeuf n° 700138.01 SPM ;
origine : Firmenich SA, Genève, Suisse
Bouillon de porc : arôme de type jambon n° 700158.02 TH ;
origine : Firmenich SA, Genève, Suisse
\* \* Bouillon de poulet : par exemple, hydrolysat n° 18, exemple 5
Bouillon de mouton : par exemple, hydrolysat n° 1, 4 ou 9, exemple 4
Bouillon de boeuf : par exemple, hydrolysat n° 22, exemple 5
Bouillon de porc : par exemple, hydrolysat n° 25 ou 29, exemple 5

Les bouillons aromatisés ainsi préparés ont été évalués à l'aveugle deux à deux, par type de viande, par un panel d'experts aromaticiens. Les résultats de ces évaluations ont montré une préférence unanime des aromaticiens pour les bouillons B, D, F et H, par rapport respectivement aux bouillons A, C, E et G.
De l'avis des aromaticiens les bouillons préférés possédaient une rondeur et un volume nettement accrus par rapport à ceux des bouillons moins préférés, et leur note gustative était beaucoup plus crémeuse et veloutée, donnant une sensation plus riche et ample dans la bouche.

Exemple 20

Compositions aromatisantes de type huiles végétales

On a préparé des compositions aromatisantes de type huile d'arachide et d'olive en mélangeant les ingrédients suivants, dans les proportions indiquées :

| Ingrédients | Compositions aromatisantes (type) | | | |
|---|---|---|---|---|
| | huile d'arachide (parties en poids) | | huile d'olive (parties en poids) | |
| | A | B | C | D |
| Huile commerciale appropriée | 80 | - | 90 | - |
| Arôme approprié * | 20 | 20 | 10 | 10 |
| Hydrolysat approprié ** | - | 80 | - | 90 |

\* arôme de type huile d'arachide : n° 502923 AH ; origine : Firmenich SA, Genève, Suisse arôme de type huile d'olive : n° 502809 T; origine: Firmenich SA, Genève, Suisse

\*\* Hydrolysat n° 11, exemple 5, pour les compositions de type huile d'arachide
Hydrolysat n° 10, exemple 5, pour les compositions de type huile d'olive

Les compositions aromatisantes ainsi préparées ont été évaluées à l'aveugle par un panel d'experts aromaticiens, dans des solutions aqueuses salines à 0,5% de NaCl, auxquelles on avait ajouté à raison de 600 ppm des compositions de type huile d'arachide et à raison de 500 ppm des compositions de type huile d'olive.
De l'avis unanime des aromaticiens, la solution contenant la composition B a été préférée à celle de la composition A pour son goût plus riche et arrondi, ayant nettement plus d'impact dans la bouche. De même, l'arôme de la composition D a été clairement préféré a celui de la composition C, dont l'impact dans la bouche était nettement moins satisfaisant.

**Revendications**

1. Procédé pour la préparation d'une composition aromatisante caractérisé en ce qu'on ajoute à un ingrédient aromatisant, solvant ou adjuvant d'usage courant la fraction diglycéridique d'un hydrolysat d'une graisse animale ou végétale, ladite fraction diglycéridique étant essentiellement libérée des mono- ou triglycérides ou des acides gras libres naturellement présents dans l'hydrolysat de graisse animale ou végétale.

2. Procédé selon la revendication 1, caractérisé en ce que ledit hydrolysat est un hydrolysat de beurre ou de lait, ou de graisse de mouton, de boeuf, de porc, d'agneau ou de poulet, ou d'huile de poisson, d'olive ou d'arachide.

3. Procédé selon la revendication 1 ou 2, caractérisé en ce qu'on ajoute en plus un ou plusieurs composés choisis dans le groupe constitué par l'acide butyrique, l'acide décanoïque, l'acide hexanoïque, l'acide octanoïque, l'acide déc-9-énoïque, l'acide 4-méthylnonanoïque, l'acide 4-méthyloctanoïque, l'acide 2-méthylheptanoïque, l'acide oléique, l'acide hexadécanoïque, l'acide pentadécanoïque, l'acide 2-méthylhexanoïque, l'acide 2-méthylbutanoïque, l'heptadécanol, l'hexadécanol et la 2-tétradécanone.

4. Procédé selon la revendication 3, caractérisé en ce qu'on ajoute un mélange constitué par tous les composés dudit groupe.

5. Procédé selon la revendication 3, caractérisé en ce qu'on ajoute un mélange constitué par les acides oléique, hexadécanoïque, 4-méthylnonanoïque, 4-méthyloctanoïque, 2-méthylheptanoïque, 2-méthylhexanoïque et 2-méthylbutanoïque.

6. Procédé selon l'une des revendications précédentes, caractérisé en ce qu'on ajoute en plus un hydrolysat d'une graisse animale ou végétale.

7. Procédé pour la préparation d'une composition aromatisante, caractérisé en ce qu'on ajoute à un hydrolysat d'une graisse animale ou végétale au moins un composé choisi dans le groupe constitué par l'acide butyrique, l'acide décanoïque, l'acide hexanoïque, l'acide octanoïque, l'acide déc-9-énoïque, l'acide 4-méthylnonanoïque, l'acide 4-méthyloctanoïque, l'acide 2-méthylheptanoïque, l'acide oléique, l'acide hexadécanoïque, l'acide pentadécanoïque, l'acide 2-méthylhexanoïque, l'acide 2-méthylbutanoïque, l'heptadécanol, l'hexadécanol et la 2-tétradécanone.

8. Procédé selon la revendication 7, caractérisé en ce qu'on ajoute un mélange constitué par tous les composés dudit groupe.

9. Procédé selon la revendication 8, caractérisé en ce qu'on ajoute un mélange constitué par les acides oléique, palmitique, 4-méthylnonanoïque, 4-méthyloctanoïque, 2-méthylheptanoïque, 2-méthylhexanoïque et 2-méthylbutanoïque.

10. Procédé selon la revendication 7, caractérisé en ce que l'hydrolysat d'une graisse animale est un hydrolysat de beurre ou de lait, ou de graisse de mouton, de boeuf, de porc, d'agneau ou de poulet, ou d'huile de poisson, d'olive ou d'arachide.

11. Procédé selon l'une des revendications 7 à 10, caractérisé en ce qu'on ajoute en plus une fraction diglycéridique d'un l'hydrolysat d'une graisse animale ou végétale.

12. Procédé selon la revendication 11, caractérisé en ce que l'hydrolysat d'une graisse animale est un hydrolysat de beurre ou de lait, ou de graisse de mouton, de boeuf, de porc, d'agneau ou de poulet.

13. Procédé selon l'une des revendications précédentes, caractérisé en ce que l'hydrolysat de graisse animale ou végétale est obtenu par hydrolyse enzymatique de ladite graisse à une température et pendant une période de temps suffisantes pour garantir un degré d'hydrolyse d'au moins 30%.

14. Procédé selon la revendication 13, caractérisé en ce que l'hydrolysat de graisse animale ou végétale contient au moins 30% en poids de diglycérides et pas plus de 2% en poids de monoglycérides, par rapport au poids de l'hydrolysat.

15. Composition aromatisante susceptible d'être obtenue par le procédé selon l'une des revendications 1 à 14.

**16.** Procédé pour impartir, améliorer ou augmenter la sensation en bouche ou "mouthfeel" d'un aliment ou d'une boisson, caractérisé en ce qu'on ajoute audit aliment ou boisson une composition aromatisante selon la revendication 15.

**17.** Aliment ou boisson comprenant une composition aromatisante selon la revendication 15.

**18.** Aliment selon la revendication 17, sous forme d'un beurre ou d'une margarine, d'un produit laitier, d'une mayonnaise, d'une soupe, d'une sauce, d'un plat prêt à consommer, d'un biscuit doux ou salé ou d'un dessert.

**Patentansprüche**

**1.** Verfahren zum Herstellen einer aromatisierenden Zusammensetzung, dadurch gekennzeichnet, daß einem Geschmacksinhaltsstoff, Lösungsmittel oder gängigen Zusatzstoff die Diglyceridfraktion eines Hydrolysats eines tierischen oder pflanzlichen Fettes zugegeben wird, wobei die Diglyceridfraktion im wesentlichen von den in dem Hydrolysat von tierischem oder pflanzlichem Fett natürlich vorkommenden Mono- oder Triglyceriden oder freien Fettsäuren befreit ist.

**2.** Verfahren nach Anspruch 1, dadurch gekennzeichnet, daß das Hydrolysat ein Hydrolysat von Butter oder Milch oder von Schaf-, Rinder-, Schweine-, Lamm- oder Hühnerfett oder von Fisch-, Oliven- oder Erdnußöl ist.

**3.** Verfahren nach Anspruch 1 oder 2, dadurch gekennzeichnet, daß des weiteren eine oder mehrere Verbindungen zugegeben werden, die aus der Gruppe bestehend aus Butter-, Decan-, Hexan-, Octan-, Dec-9-en-, 4-Methylnonan-, 4-Methyloctan-, 2-Methylheptan-, Öl-, Hexadecan-, Pentadecan-, 2-Methylhexan-, 2-Methylbutansäure, Heptadecanol, Hexadecanol und 2-Tetradecanon ausgewählt sind.

**4.** Verfahren nach Anspruch 3, dadurch gekennzeichnet, daß eine Mischung zugegeben wird, die aus allen Verbindungen der genannten Gruppe besteht.

**5.** Verfahren nach Anspruch 3, dadurch gekennzeichnet, daß eine Mischung zugegeben wird, die aus Öl-, Hexadecan-, 4-Methylnonan-, 4-Methyloctan-, 2-Methylheptan-, 2-Methylhexan- und 2-Methylbutansäure besteht.

**6.** Verfahren nach einem der vorhergehenden Ansprüche, dadurch gekennzeichnet, daß des weiteren ein Hydrolysat eines tierischen oder pflanzlichen Fettes zugegeben wird.

**7.** Verfahren zum Herstellen einer aromatisierenden Zusammensetzung, dadurch gekennzeichnet, daß einem Hydrolysat eines tierischen oder pflanzlichen Fettes mindestens eine Verbindung zugegeben wird, die aus der Gruppe bestehend aus Butter-, Decan-, Hexan-, Octan-, Dec-9-en-, 4-Methylnonan-, 4-Methyloctan-, 2-Methylheptan-, Öl-, Hexadecan-, Pentadecan-, 2-Methylhexan-, 2-Methylbutansäure, Heptadecanol, Hexadecanol und 2-Tetradecanon ausgewählt ist.

**8.** Verfahren nach Anspruch 7, dadurch gekennzeichnet, daß eine Mischung zugegeben wird, die aus allen Verbindungen der genannten Gruppe besteht.

**9.** Verfahren nach Anspruch 8, dadurch gekennzeichnet, daß eine Mischung zugegeben wird, die aus Öl-, Palmitin-, 4-Methylnonan-, 4-Methyloctan-, 2-Methylheptan-, 2-Methylhexan- und 2-Methylbutansäure besteht.

**10.** Verfahren nach Anspruch 7, dadurch gekennzeichnet, daß das Hydrolysat eines tierischen Fettes ein Hydrolysat von Butter oder Milch oder von Schaf-, Rinder-, Schweine-, Lamm- oder Hühnerfett oder von Fisch-, Oliven- oder Erdnußöl ist.

**11.** Verfahren nach einem der Ansprüche 7 bis 10, dadurch gekennzeichnet, daß des weiteren eine Diglyceridfraktion eines Hydrolysats eines tierischen oder pflanzlichen Fettes zugegeben wird.

**12.** Verfahren nach Anspruch 11, dadurch gekennzeichnet, daß das Hydrolysat eines tierischen Fettes ein Hydrolysat von Butter oder Milch oder von Schaf-, Rinder-, Schweine-, Lamm- oder Hühnerfett ist.

**13.** Verfahren nach einem der vorhergehenden Ansprüche, dadurch gekennzeichnet, daß das Hydrolysat von tierischem oder pflanzlichem Fett durch enzymatische Hydrolyse des Fettes bei einer Temperatur und während einer Zeitspanne erhalten wird, die ausreichen, um einen Hydrolysegrad von mindestens 30% sicherzustellen.

14. Verfahren nach Anspruch 13, dadurch gekennzeichnet, daß das Hydrolysat von tierischem oder pflanzlichem Fett mindestens 30 Gew.-% Diglyceride und nicht mehr als 2 Gew.-% Monoglyceride bezogen auf das Gewicht des Hydrolysats enthält.

15. Aromatisierende Zusammensetzung, die durch das Verfahren nach einem der Ansprüche 1 bis 14 herstellbar ist.

16. Verfahren zum Verleihen, Verbessern oder Verstärken der oralen Gefühlswahrnehmung ("mouthfeel") eines Nahrungsmittels oder eines Getränks, dadurch gekennzeichnet, daß dem Nahrungsmittel oder Getränk eine aromatisierende Zusammensetzung nach Anspruch 15 zugegeben wird.

17. Nahrungsmittel oder Getränk, welches eine aromatisierende Zusammensetzung nach Anspruch 15 aufweist.

18. Nahrungsmittel nach Anspruch 17 in Form einer Butter oder einer Margarine, eines Milchprodukts, einer Mayonnaise, einer Suppe, einer Sauce, eines Fertiggerichts, eines süßen oder salzigen Kekses oder einer Nachspeise.

**Claims**

1. Process for the preparation of a flavoring composition, characterized in that there is added to a flavoring ingredient, solvent or adjuvant of current use the diglyceride fraction of a hydrolysate of an animal or vegetable fat, said diglyceride fraction being essentially free from the mono- or triglycerides, or from the free fatty acids, naturally present in the hydrolysate of an animal or vegetable fat.

2. Process according to claim 1, characterized in that said hydrolysate is a butter or milk hydrolysate, or a hydrolysate of mutton, beef, pork, lamb or chicken fat, or of fish, olive or peanut oil.

3. Process according to claim 1 or 2, characterized in that there is further added one or more compounds selected from the group consisting of butyric acid, decanoic acid, hexanoic acid, octanoic acid, dec-9-enoic acid, 4-methylnonanoic acid, 4-methyloctanoic acid, 2-methylheptanoic acid, oleic acid, hexadecanoic acid, pentadecanoic acid, 2-methylhexanoic acid, 2-methylbutanoic acid, heptadecanol, hexadecanol and 2-tetradecanone.

4. Process according to claim 3, characterized in that there is added a mixture formed of all the compounds of said group.

5. Process according to claim 3, characterized in that there is added a mixture formed of oleic, hexadecanoic, 4-methylnonanoic, 4-methyloctanoic, 2-methylheptanoic, 2-methylhexanoic and 2-methylbutanoic acids.

6. Process according to any one of the preceding claims, characterized in that there is further added a hydrolysate of an animal or vegetable fat.

7. Process for the preparation of a flavoring composition, characterized in that there is added to a hydrolysate of an animal or vegetable fat at least one compound selected from the group consisting of butyric acid, decanoic acid, hexanoic acid, octanoic acid, dec-9-enoic acid, 4-methylnonanoic acid, 4-methyloctanoic acid, 2-methylheptanoic acid, oleic acid, hexadecanoic acid, pentadecanoic acid, 2-methylhexanoic acid, 2-methylbutanoic acid, heptadecanol, hexadecanol and 2-tetradecanone.

8. Process according to claim 7, characterized in that there is added a mixture formed of all the compounds of said group.

9. Process according to claim 8, characterized in that there is added a mixture formed of oleic, palmitic, 4-methylnonanoic, 4-methyloctanoic, 2-methylheptanoic, 2-methylhexanoic and 2-methylbutanoic acids.

10. Process according to claim 7, characterized in that the hydrolysate of an animal fat is a butter or milk hydrolysate, or a hydrolysate of mutton, beef, pork, lamb or chicken fat, or of fish, olive or peanut oil.

11. Process according to any one of claims 7 to 10, characterized in that there is further added a diglyceride fraction of a hydrolysate of an animal or vegetable fat.

12. Process according to claim 11, characterized in that the hydrolysate of an animal fat is a butter or milk hydrolysate, or a hydrolysate of mutton, beef, pork, lamb or chicken fat.

13. Process according to any one of the preceding claims, characterized in that the hydrolysate of an animal or vegetable fat is obtained by enzymatic hydrolysis of said fat, at a temperature and during an amount of time sufficient to ensure a degree of hydrolysis of at least 30%.

14. Process according to claim 13, characterized in that the hydrolysate of an animal or vegetable fat contains at least 30% by weight of diglycerides and not more than 2% by weight of monoglycerides, relative to the weight of the hydrolysate.

15. Flavoring composition resulting from the process according to any one of claims 1 to 14.

16. Process to impart, improve or enhance the mouthfeel of a foodstuff or beverage, characterized in that there is added to said foodstuff or beverage a flavoring composition according to claim 15.

17. Foodstuff or beverage comprising a flavoring composition according to claim 15.

18. Foodstuff according to claim 17, in the form of butter or margarine, a dairy product, a mayonnaise, a soup, a sauce, a ready-to-eat meal, a sweet or savory biscuit, or a dessert.